# EUROPÄISCHE PATENTSCHRIFT

(11) **EP 2 953 576 B1**
(45) Veröffentlichungstag und Bekanntmachung des Hinweises auf die Patenterteilung: **01.11.2017**
(21) Anmeldenummer: 14708880.1
(22) Anmeldetag: 10.03.2014
(51) Int. Cl.: A61C 13/34, A61C 13/00, A61C 9/00

(54) **VERFAHREN ZUR HERSTELLUNG EINES VERZUGSFREIEN DENTALMODELLS UND SOLCHERMASSEN HERGESTELLTES DENTALMODELL**
METHOD FOR PRODUCING A DISTORTION-FREE DENTAL MODEL, AND DENTAL MODEL SO PRODUCED
PROCÉDÉ D'ÉLABORATION D'UN MODÈLE DENTAIRE SANS DISTORTION ET MODÈLE DENTAIRE FABRIQUÉ DE CETTE MANIÈRE

(30) Priorität: 11.03.2013 DE 102013204146
(43) Veröffentlichungstag der Anmeldung: 16.12.2015
(73) Patentinhaber: EOS GmbH Electro Optical Systems, 82152 Krailling (DE)
(72) Erfinder: REISCHLE, Gregor, 80639 München (DE); HEIN, Sabine, 81247 München (DE)
(74) Vertreter: Prüfer & Partner mbB Patentanwälte · Rechtsanwälte
(86) Internationale Anmeldenummer: PCT/EP2014/054603
(87) Internationale Veröffentlichungsnummer: WO 2014/139962

(56) Entgegenhaltungen:
- WO-A1-2011/106472
- US-A1- 2006 093 992

## Beschreibung

Die vorliegende Erfindung ist gerichtet auf ein Verfahren zum verzugfreien Herstellen von Bauteilen mittels eines generativen Fertigungsverfahrens, auf die damit erhaltenen Bauteile und speziell auf ein Dentalmodell.

Die vorliegende Anmeldung versteht unter dem Begriff "Dentalmodell" eine dreidimensionale 1:1 Reproduktion des von Zahnfleisch umgebenen Kieferknochens, in welchem auch ein Zahn oder Zahnstumpf vorhanden sein kann. Bei der Anwendung des Verfahrens auf die Herstellung von Vollprotesen ist kein Zahn oder Zahnstumpf im Dentalmodell vorhanden.

In Folge der hohen Genauigkeitsanforderungen, beispielsweise bei der Anfertigung einer Krone oder Brücke, beinhaltet das bekannte konventionelle Herstellungsverfahren viele manuell ausgeführte Schritte.

Einer der Schritte, die manuell vorgenommen werden ist das Herstellen eines Dentalmodells durch Ausgießen einer Abdruckform mit Gips. Der ausgehärtete Gips ergibt dann das Dentalmodell. Ein anderer dieser manuellen Schritte sieht vor, das Dentalmodell an vorgegebenen Stellen zwischen den Zähnen zu durchsägen. Dies ist nötig, um einen seitlichen Zugang zu den entsprechenden Stellen im Dentalmodell zu ermöglichen, was wiederum eine Voraussetzung ist, den Zahnersatz exakt modellieren zu können.

Bevor das Dentalmodell bearbeitet wird, ist es nötig Referenzpunkte zwischen dem Dentalmodell und einer sogenannten Montageplatte zu schaffen.

Bei der Bearbeitung des Dentalmodells ist es wichtig, dass nach dem Durchführen von Bearbeitungsschritten an einzelnen Segmenten oder Einzelzähnen die ursprüngliche Lage und Orientierung der einzelnen Segmente oder Einzelzähne im Dentalmodell wieder hergestellt wird.

Hierzu findet eine sogenannte Montageplatte Einsatz, welche Referenzverbindungen mit dem Dentalmodell bzw. den einzelnen Segmenten oder Einzelzähnen hat.

Dies erlaubt es dem Zahntechniker die einzelnen Segmente oder Einzelzähne von der Montageplatte zu entnehmen, zu bearbeiten und wieder einzusetzen ohne dass sich die ursprüngliche originale Lage und Orientierung der Segmente oder Einzelzähne im Dentalmodell verändert.

Es sind mehrere Alternativen von Montageplatten bekannt, eine erste Alternative ist eine vorgefertigte Standardmontageplatte mit Stiften, die in einem festen Rasterabstand angeordnet sind, eine zweite Art von Montageplatte wird individuell angefertigt.

Ein Dentalmodell, das mit der Standardmontageplatte zusammen verwendet wird, benötigt an seiner Unterseite Löcher, die den gleichen Rasterabstand aufweisen wie die Stifte auf der Montageplatte.

Dies hat den Nachteil, dass genau an der Stelle, an der das Dentalmodell durchschnitten wird ein Loch vorhanden sein kann und der korrespondierende Stift ins Leere geht und eine Referenzverbindung "zerstört" ist. Insbesondere wenn im Dentalmodell ein Einzelzahn vorgesehen ist, kann es vorkommen, dass jeder der Schnitte, die zu beiden Seiten des Einzelzahnes vorhanden sind auf ein Loch trifft und mehrere Referenzverbindungen "zerstört" sind. Dies führt in nachteiliger Weise zu einem Einzelzahn, dessen Lage nicht mehr eindeutig definiert ist.

Die zweite Alternative für eine Montageplatte wird individuell für jedes Dentalmodell angefertigt. Ein Dentalmodell welches mit dieser Art von Montageplatte zusammenarbeitet benötigt auch Löcher an seiner Unterseite, diese Löcher sind allerdings nicht an ein vorgegebenes Raster gebunden sondern können individuell für jedes Dentalmodell angeordnet werden.

Um die Referenzverbindungen zwischen Dentalmodell und einer Montageplatte gemäß der zweiten Alternative erstmalig zu definieren wird wie folgt vorgegangen:
In die Löcher, welche sich an der Unterseite des Dentalmodells befinden werden Stifte eingesetzt, die so lang bemessen sind, dass sie nach dem Einsetzen in die Löcher noch einen gewissen Betrag aus dem Dentalmodell hervorstehen.
Auf den hervorstehenden Teil der Stifte werden bevorzugt Hülsen aufgesteckt. Die Hülsen bestehen an ihrer Innenseite bevorzugt aus einem gleitfähigen Material.

Der aus dem Dentalmodell hervorstehende Teil der Stifte, welcher von den Hülsen umgeben ist wird anschließend in ein Gipsbett eingedrückt. Die Hülsen können bevorzugt eine strukturierte Außenseite haben, welche nach dem Aushärten des Gipses einen Formschluss zwischen Hülse und Montageplatte bewirkt.

Nach dem Aushärten des Gipses kann das Dentalmodell von der Montageplatte genommen werden. Die Hülse verbleibt hierbei in der Montageplatte und die Stifte verbleiben im Dentalmodell, wobei es für die Funktion der Stifte als Referenzverbindung unerheblich ist, ob sie im Dentalteil oder in der Montageplatte verbleiben.

Bei dieser Alternative für die Montageplatte ist es möglich die Löcher im Dentalmodell so anzuordnen, dass sie nicht an einer Stelle angeordnet sind, an der später das Dentalmodell durchschnitten wird. Damit ist es auch möglich für Einzelzähne ausreichend viele Referenzverbindungen zur Verfügung zu stellen.

Nun wird das Dentalmodell an den vorgesehenen Stellen getrennt und es entstehen die einzelnen Segmente oder Einzelzähne.

Diese Segmente oder Einzelzähne werden anschließend wieder mittels der Referenzverbindungen mit der Montageplatte verbunden. Als Ergebnis erhält man ein Dentalmodell, bei welchen die einzelnen Segmente oder Zähne wieder präzise mit der richtigen Orientierung gegenüber den übrigen Teilen des Dentalmodells positioniert sind. Der beim Zersägen aufgetretene Materialverlust tritt als Spalt in Erscheinung, hat aber keine negativen Auswirkungen auf die richtige Orientierung der Teile zueinander.

Die einzelnen Segmente oder Einzelzähne können für weitere Bearbeitungsschritte der Montageplatte entnommen werden - etwa um sie manuell zu bearbeiten - und anschließend wieder in die Montageplatte eingesetzt werden und die richtige Orientierung der Teile zueinander bleibt immer erhalten.

Mittels generativem Herstellungsverfahren ist es möglich Dentalmodelle herzustellen, die entweder mit der ersten oder zweiten oben beschriebenen Art von Montageplatten zusammenwirken.

Es hat sich jedoch gezeigt, dass es bei der Herstellung des Dentalmodells mittels eines generativen Herstellungsverfahrens zu einem Verzug des Dentalmodells kommen kann. Die Gefahr, dass es zu einem Verzug kommt ist um so größer, je größer das Dentalmodell ist.

Der Anmelderin ist ein Verfahren bekannt, bei dem mittels eines CAD-Programms das Dentalmodell so verändert wird, dass an den Stellen an denen üblicherweise mit einer Säge das Material durchschnitten wird ein Spalt generiert wird, der dem beim Sägen auftretenden Materialverlust entspricht. Hierdurch wird das Dentalmodell durch das CAD Programm in einzelne Segmente oder Einzelzähne zerlegt. Dies hat den Vorteil, dass das das Dentalmodell in kleinere Stücke aufgeteilt ist, was grundsätzlich die Gefahr eines Verzuges reduziert. Andererseits ist es hierbei nachteilig, dass nach dem generativen Herstellungsprozess die einzelnen Teile des Dentalmodells lose vorhanden sind.

Ein solchermaßen hergestelltes Dentalmodell ist nicht geeignet für eine Verwendung mit einer Montageplatte gemäß der zweiten Alternative.

Die verbleibende Verwendung mit einer Montageplatte gemäß der ersten Alternative ist hingegen wieder gefährdet durch die Lage der Schnitte im Bereich der Löcher, wodurch wie oben erläutert Referenzverbindungen "zerstört" werden können.

US-A-2006 093 992 beschreibt ein Verfahren und eine Vorrichtung zum Herstellen und Aufbauen eines physischen Dentalbrückenmodells. Hierbei wird zunächst ein dreidimensionales digitales Modell der Dentalbrücke geglättet, um eine bessere Bearbeitung in einem CNC-basierten Herstellverfahren zu ermöglichen. Nachfolgend wird das digitale Modell in mindestens zwei herstellbare digitale Komponenten zerlegt, die dann mittels eines CNC-basierten Verfahrens hergestellt werden und nachfolgend zu dem physischen Dentalbrückenmodell zusammengesetzt werden. Angesichts der oben geschilderten Probleme ist es eine Aufgabe der vorliegenden Erfindung, ein Verfahren bereitzustellen, das eine Herstellung von kompletten Dentalmodellen mittels eines generativen Schichtbauverfahrens ermöglicht, bei dem die Gefahr des Verzuges minimiert ist und das für ein Zusammenwirken mit einer Montageplatte gemäß der zweiten Alternative geeignet ist. Diese Aufgabe wird gelöst durch ein Verfahren nach Anspruch 1 und ein Dentalmodell nach Anspruch 8. Weiterbildungen der Erfindung sind in den Unteransprüchen angegeben.

Die Idee der Erfindung ist es, ein Dentalmodell in einzelnen Segmenten oder Einzelzähnen herzustellen, welche über, mittels generativer Schichtbauweise hergestellten, Verbindungsbrücken miteinander verbunden sind und in ihrer Lageanordnung zueinander festgelegt sind. Durch das Vorsehen von Spalten, durch welche die einzelnen Objektsegmente voneinander getrennt sind (mit Ausnahme einer Verbindung über dünne Verbindungsbrücken), lässt sich der Verzug deutlich reduzieren, so dass die Bauteilabmessungen in geringerem Maße von den Sollabmessungen abweichen.

Durch das erfindungsgemäße Verfahren wird unter anderem in vorteilhafter Weise eine Entnahme des Dentalmodells als Ganzes aus dem Pulverbett ermöglicht, wodurch sich der Arbeitsschritt des Sortierens der Einzelteile erübrigt. Durch das Vorsehen der spaltartigen Ausnehmungen zwischen den Zahnpositionen im Dental-modell ist gleichzeitig ein Durchtrennen an diesen Stellen erleichtert, da nur die dünnen Verbindungsbrücken durchtrennt werden müssen.
Fig. 1 zeigt eine seitliche Teilansicht eines erfindungsgemäßen Dentalmodells (Sägeschnittmodells),
Fig. 2 zeigt eine abgewandelte Ausführungsform des in Fig. 1 gezeigten Dentalmodells,
Fig. 3 zeigt eine Unteransicht des in Fig. 1 gezeigten Teilbereichs,
Fig. 4 zeigt eine Draufsicht auf den in Fig. 1 gezeigten Teilbereich und
Fig. 5 zeigt eine schematische Darstellung einer Lasersintermaschine.

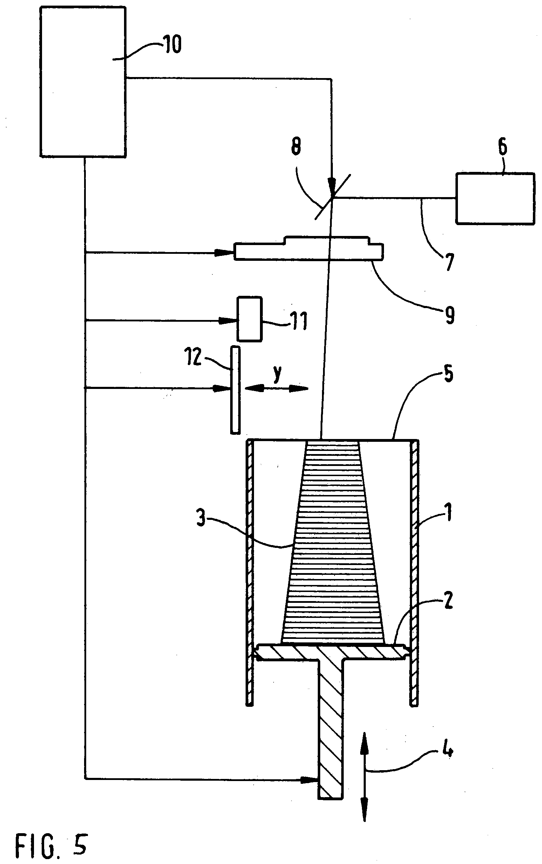

Für eine Beschreibung des erfindungsgemäßen Verfahrens soll zunächst nachfolgend beispielhaft ein Lasersinterverfahren mit Bezugnahme auf Fig. 5 beschrieben werden.

Die Vorrichtung weist einen Baubehälter 1 auf, in dem ein Träger 2 zum Tragen eines zu bildenden Objekts 3 vorgesehen ist. Der Träger 2 ist über eine Höheneinstelleinrichtung 4 in vertikaler Richtung in dem Baubehälter verfahrbar. Die Ebene, in der aufgetragenes pulverförmiges Aufbaumaterial verfestigt wird, definiert eine Arbeitsebene 5. Zum Verfestigen des pulverförmigen Materials in der Arbeitsebene 5 ist ein Laser 6 vorgesehen, der einen Laserstrahl 7 erzeugt, welcher über eine Ablenkeinrichtung 8 und gegebenenfalls eine Fokussiereinheit 9 auf die Arbeitebene 5 fokussiert wird. Es ist eine Steuerung 10 vorgesehen, die die Ablenkeinrichtung 8 und gegebenenfalls die Fokussiereinheit 9 derart ansteuert, dass der Laserstrahl 7 auf jede beliebige Stelle der Arbeitsebene 5 gelenkt werden kann. Die Steuerung 10 wird über Daten, die die Struktur des herzustellenden Objekts (ein dreidimensionales CAD-Modell des Objekts) beinhalten, angesteuert. Insbesondere enthalten die Daten genaue Informationen über jede zu verfestigende Schicht bei der Herstellung des Objekts.

Ferner ist eine Zuführvorrichtung 11 vorgesehen, mit der pulverförmiges Aufbaumaterial für eine folgende Schicht zugeführt werden kann. Mittels eines Beschichters 12 wird das Aufbaumaterial in der Arbeitsebene 5 aufgebracht und geglättet.

Im Betrieb wird der Träger 2 Schicht für Schicht abgesenkt, eine neue Pulverschicht aufgetragen und mittels des Laserstrahls 7 an den dem jeweiligen Objekt entsprechenden Stellen der jeweiligen Schicht in der Arbeitsebene 5 verfestigt.

Als pulverförmiges Aufbaumaterial können alle für das Lasersinterverfahren geeigneten Pulver bzw. Pulvermischungen verwendet werden. Solche Pulver umfassen z. B. Kunststoffpulver wie Polyamid oder Polystyrol, PAEK (Polyaryletherketon), Elastomere, wie PEBA (Polyether Block Amide), Metallpulver, z. B. Edelstahlpulver oder andere, dem jeweiligen Zweck angepasst Metallpulver, insbesondere Legierungen, kunststoffbeschichteter Sand oder Keramikpulver.

Nachfolgend wird die erfindungsgemäße Herstellung eines Dental-modells beschrieben.

Zunächst wird ein CAD-Modell des von Zahnfleisch umgebenen Kieferknochens in welchem auch ein Zahn oder Zahnstumpf vorhanden sein kann. Bei der Anwendung des Verfahrens auf die Herstellung von Vollprotesen ist kein Zahn oder Zahnstumpf im Dentalmodell vorhanden. Dieses Oberflächenmodell des Kiefers kann berührungslos z.B. durch einen Oralscan oder eine CT-Aufnahme gewonnen werden. Man kann dieses CAD-Modell auch durch Scannen eines Abdrucks des Gebisses (Negativ-Form) oder durch Scannen eines Gipsmodells des Gebisses (Positiv-Form) gewinnen.

In diesem CAD-Modell (den Rohdaten) werden dann Schnitte (spaltförmige Ausnehmungen) angebracht, durch welche das Modell in Segmente zerlegt wird. Hierbei dürfen sich die Außenabmessungen des Dental-Modells nicht ändern und ferner darf auch nicht die Lage und Orientierung der erhaltenen Segmente zueinander verändert werden.

Nun werden erfindungsgemäß in einem weiteren Schritt an den spaltförmigen Ausnehmungen Verbindungsbrücken angebracht, durch welche eine teilweise Verbindung zwischen den Segmenten geschaffen wird. Obwohl in den Figuren die Verbindungsbrücken in den spaltförmigen Ausnehmungen gezeigt sind, ist es alternativ möglich, einige oder sogar alle Verbindungsbrücken außerhalb der spaltförmigen Ausnehmungen vorzusehen. So können Verbindungsbrücken Verbindungsbrücken am Rande der spaltförmigen Ausnehmung so vorgesehen sein, dass sie über den Rand nach außen auskragen, oder aber so vorgesehen sein, dass sie vollständig außerhalb einer spaltförmigen Ausnehmung liegen.

Nun wird das CAD-Modell noch in Schichten zerlegt, welche den zu verfestigenden Schichten des Aufbaumaterials (in der Regel Kunststoff, z.B. Polyamid) entsprechen. Auf der Grundlage der daraus resultierenden Daten erfolgt nachfolgend die Herstellung des Modells mittels eines generativen Schichtbauverfahrens, bevorzugt eines pulverbasierten Lasersinterverfahren. Diese Daten werden Produktionsdaten genannt.

Im weiter oben beschriebenen Beispiel einer Lasersintervorrichtung wären also die Produktionsdaten jene Daten, welche die Strukturinformationen über das Dentalmodell enthalten und mit denen die Steuerung 10 angesteuert wird. Falls es sich bei dem generativen Schichtbauverfahren nicht um ein Lasersinterverfahren handelt, kann in gleicher Weise vorgegangen werden und die Produktionsdaten, die in einem gängigen Format vorliegen, beispielsweise dem STL-Format, werden auch in solch einem Fall von einer entsprechenden Steuerung 10 verarbeitet. Insbesondere kann für das erfindungsgemäße Verfahren ein Fused Deposition Modelling (FDM), ein 3D-Drucken sowie ein Maskensinterverfahren, jeweils mit pulverförmigem Ausgangsmaterial, anstelle des Lasersinterverfahren verwendet werden. Es sei hier erwähnt, dass bei allen Verfahren, bei denen bei der Verfestigung des pulverförmigen Baumaterials eine Erwärmung stattfindet, Verzug auftreten kann. Selbst bei einem 3D-Druckvorgang, bei dem dem Baumaterial selektiv ein Kleber zugeführt wird, kann es bei der Aushärtung zu Verzug kommen, da der Kleber normalerweise in unterschiedlichen Schichten an unterschiedlichen Stellen aufgebracht wird.

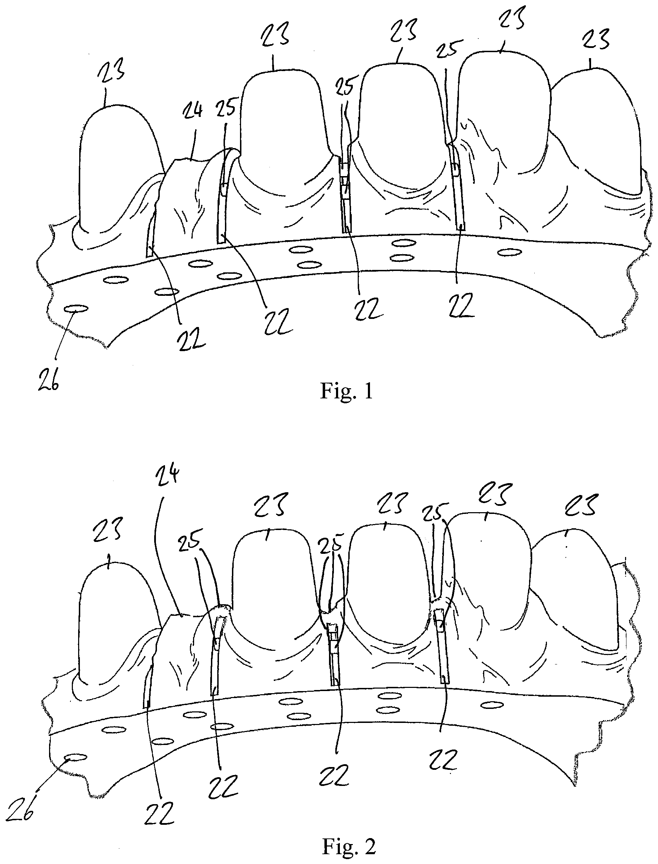

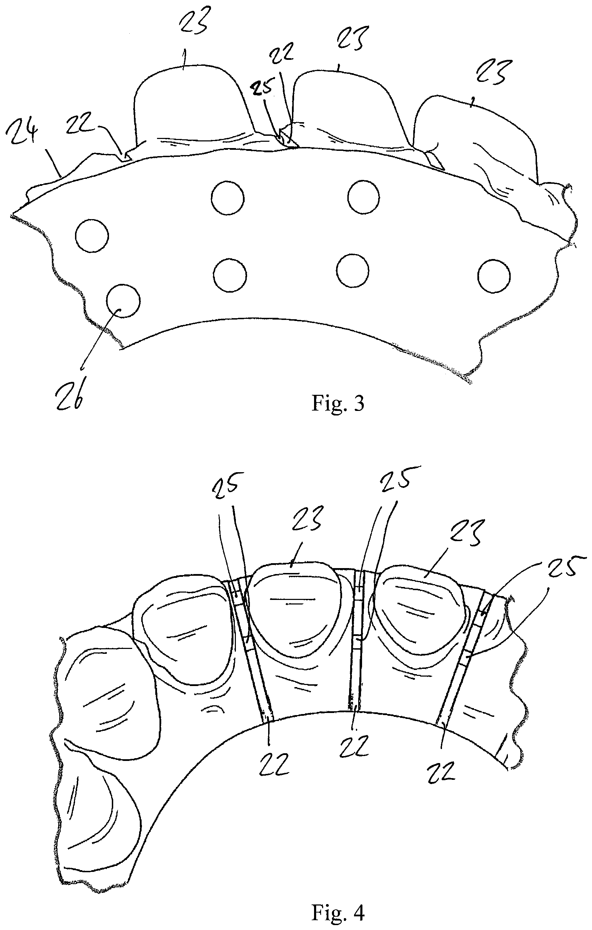

In den Figuren 1 bis 4 erkennt man in dem Dentalmodell 1 spaltförmige Ausnehmungen 22 zwischen zwei Zähnen 23 oder aber zwischen einem Zahn 23 und einem zu präparierenden Stumpf 24. Des Weiteren erkennt man in den spaltförmige Ausnehmungen 22 Verbindungsbrücken 25, die mittels des generativen Schichtbauverfahrens aus dem gleichen Material gefertigt sind wie das gesamte restliche Dental-Modell.

Wie bereits in der Beschreibungseinleitung erläutert wurde, ist es bei der Präparation von Zahnersatz üblich, die Kiefermodelle so vorzusehen, dass das auf eine Montageplatte montierte Modell an mehreren Stellen durchsägt ist, so dass einzelne Zähne entnommen werden können. Wird ein Dentalmodell in solcher Weise verwendet, bietet es sich an, die Schnitte und Verbindungsbrücken an jenen Stellen vorzusehen, an denen später das Modell durchsägt werden wird.

Es wurden Versuche durchgeführt, bei denen einerseits ein vollständiges Kiefermodell mittels Lasersinterns hergestellt wurde und andererseits ein Kiefermodell mit den erfindungsgemäßen Schnitten und Verbindungsbrücken hergestellt wurde. Es zeigte sich, dass sich durch das erfindungsgemäße Vorgehen die Abweichung der Modellabmessungen von den Sollabmessungen um mehr als einen Faktor 2 verringern lässt. Mit dem erfindungsgemäßen Vorgehen lassen sich die Abweichungen auf maximal 30 µm begrenzen. Damit wird eine Genauigkeit bei der Herstellung möglich, die in den Bereich der Messgenauigkeit bei der Durchführung eines Oralscans kommt.

Die Genauigkeit der Fertigung ist umso größer, je weniger die Segmente miteinander verbunden sind. Für eine genaue Fixierung der Orientierung zweier benachbarter Segmente zueinander sollten bevorzugt mindestens drei Verbindungsbrücken 25 vorgesehen werden. Der maximale Durchmesser jeder Verbindungsbrücke 25 (parallel zur spaltartigen Ausnehmung) sollte dabei bevorzugt unter 2 mm liegen, besonders bevorzugt unter 1 mm. Nichtsdestotrotz ist es aber eine wesentliche Eigenschaft der Erfindung, dass zwei benachbarte Segmente durch die Verbindungsbrücken formstabil miteinander verbunden werden. Bei mehr als drei Verbindungsbrücken 25 zwischen benachbarten Segmenten kann der Maximaldurchmesser der Verbindungsbrücken kleiner gewählt werden als bei genau drei Verbindungsbrücken 25. Letztendlich sollten die Verbindungsbrücken zur Minimierung des Verzugs so dünn wie möglich sein, jedoch dennoch eine Dicke aufweisen, die hinreichend für eine Formstabilität des Kiefermodells sorgt.

Obwohl in den Figuren 1 bis 3 lediglich ein Zahnstumpf 24 als zu präparierender Abschnitt gezeigt ist, ist es natürlich möglich, den zu präparierenden Abschnitt, der zwischen zwei Schnitten 22 liegt, größer zu wählen, so dass er beispielsweise zwei oder drei Zahnpositionen umfasst. Damit kann solch ein Abschnitt beispielsweise zur Herstellung einer Brücke verwendet werden. Da der Verzug von der Größe der Segmente des Bauteils abhängt, gibt es aber eine Obergrenze für die Größe eines Segmentes, das zwischen zwei Schnitten 22 liegt. Es hat sich gezeigt, dass die Größe eines Segmentes drei Zahnpositionen nicht übersteigen sollte.

Es kann auch für den Zahntechniker zweckmäßig sein, wenn die Schnitte (spaltförmigen Ausnehmungen) 22 zwischen allen Zähnen vorhanden sind. Der Zahntechniker kann dann frei entscheiden, an welchen Stellen das Kiefermodell durchtrennt werden soll.

Wie in Fig. 2 gezeigt, kann eine Verbindungsbrücke auch am Rande der spaltartigen Ausnehmungen 22, welche die Segmente voneinander trennt, angebracht sein. In der Figur 2 ist solch eine Brücke im Zwischenraum zwischen den Zähnen in einem Bereich gezeigt, der am weitesten vom Boden des Dentalmodells entfernt ist (am oberen Rand der spaltartigen Ausnehmung). Hier gibt es beliebige Möglichkeiten der Abwandlung, sofern für eine Fixierung der Orientierung der Segmente zueinander gesorgt ist.

Neben der Anbringung des Dentalmodells auf einer vorgefertigten Montageplatte gemäß der ersten Alternative ist es auch Praxis im Labor, eine Montageplatte gemäß der in der Beschreibungseinleitung erläuterten zweiten Alternative zu verwenden.
Hierzu werden in die Löcher im Boden des Dentalmodells zunächst einzelne Stifte zu gesteckt, die so lang bemessen sind, dass sie aus dem Dentalmodell herausstehen. Anschließend werden die aus dem Dentalmodell herausstehenden Stifte in ein Gipsbett gedrückt. Auf diese Weise liegt nach dem Aushärten des Gipsbettes eine passgenaue Montageplatte vor, von der das Dentalmodell wieder abgenommen werden kann.

Bei dieser Vorgehensweise ist es von Vorteil, dass die Löcher 26 im Boden des Dentalmodells so angeordnet werden können, dass die Löcher 26 immer einen gewissen Abstand von den spaltartigen Ausnehmungen 22 haben. Zusammen mit den Stiften wirken diese Löcher 26 als Referenzverbindung auch nach dem Durchsägen der Verbindungsbrücken 25.

Wenn die spaltartigen Ausnehmungen 22 zwischen den Segmenten am Boden des Dentalmodells geschlossen sind, wird vorteilhaft ein Eindringen von Gips in die spaltartigen Ausnehmungen 22 verhindert. Allerdings ist solch eine Verbindungsbrücke 25 am Boden alleine noch nicht ausreichend, um für eine ausreichende Steifigkeit des Dentalmodells zu sorgen. Da beim Eindrücken des Dentalmodells in das Gipsbett starke Kräfte auf das Dentalmodell einwirken, sollte zusätzlich mindestens eine weitere Verbindungsbrücke jeder spaltartigen Ausnehmung 22 zugeordnet sein, um ein Verwinden des Dentalmodells zu verhindern.

Die Verbindungsbrücken 25 zwischen den Einzelsegmenten müssen natürlich nicht zwangsläufig die Stiftgestalt aufweisen, die in den Figuren dargestellt ist.

Es wäre beispielsweise möglich, an Stelle der stiftförmigen Verbindungsbrücken 25 Druckknopfverbindungen zwischen den Segmenten auszubilden, die eine reversible Trennung der Segmente voneinander ermöglichen.

Eine weitere Ausgestaltungsmöglichkeit für die Verbindung zwischen den Segmenten ist eine dünne umlaufende Verbindung, welche die gesamte spaltförmige Ausnehmung 22 umgibt.

Am fertigen Modell wäre dann eine spaltförmige Ausnehmung 22 nicht von außen erkennbar. Ein Durchsägen des Dentalmodells wäre dennoch an der Stelle der spaltförmigen Ausnehmung 22 auf einfache Weise möglich, da die umlaufende Verbindung lediglich eine Dicke von z.B. 500 µm bis 1 mm aufweist.

Ferner besteht noch die Möglichkeit, die Verbindungsbrücken in der spaltartigen Ausnehmung 22 als Gittergeflecht auszubilden.

Die Gestalt und Anzahl der Verbindungsbrücken ist für vorgegebene Randbedingungen (Verzug, Stabilität, etc.) im Prinzip frei wählbar. Als generelle Faustregel lässt sich aber sagen, dass das Volumen aller Verbindungsbrücken an einer spaltartigen Ausnehmung 22 kleiner als zwanzig Prozent des Volumens der spaltartigen Ausnehmung 22 sein sollte.

## Patentansprüche

1. Verfahren zur Herstellung eines Dentalmodells zur Verwendung im zahntechnischen Bereich mittels eines generativen Schichtbauverfahrens, das folgende Schritte enthält:
Abändern eines dreidimensionalen CAD-Modells des Dentalmodells, wobei mindestens eine spaltartige Ausnehmung (22) generiert wird, so dass das CAD-Modell durch diese mindestens eine spaltartige Ausnehmung (22) in Segmente zerschnitten wird,
Herstellen des Dentalmodells mittels eines generativen Schichtbauverfahrens auf der Grundlage des abgeänderten dreidimensionalen CAD-Modells,
**dadurch gekennzeichnet, dass**
in dem Schritt der Abänderung des dreidimensionalen CAD-Modells an mindestens einer der spaltartigen Ausnehmung (22) mindestens eine Verbindungsbrücke (25) generiert wird, welche die an die spaltartige Ausnehmung (22) angrenzenden Segmente miteinander verbindet,
wobei die mindestens eine Verbindungsbrücke (25) geeignet ist, die Orientierung und Lage der an die spaltartige Ausnehmung (22) angrenzenden Segmente zueinander zu fixieren.

2. Verfahren nach Anspruch 1, bei dem mindestens eine Verbindungsbrücke (25) in einer spaltartigen Ausnehmung generiert wird.

3. Verfahren nach einem der Ansprüche 1 bis 2, wobei nach der Herstellung des Dentalmodells die Verbindungsbrücken (25) durchtrennt werden.

4. Verfahren nach Anspruch 3, wobei vor dem Durchtrennen der Verbindungsbrücken (25) Referenzverbindungen zwischen dem Dentalmodell und einer Montageplatte hergestellt werden.

5. Verfahren nach Anspruch 4, wobei die Referenzverbindungen dadurch hergestellt werden, dass beim Aufsetzen des Dentalmodells auf die Montageplatte aus der Montageplatte ragende Stifte in Löcher (26) im Boden des Dentalmodells eingreifen.

6. Verfahren nach einem der Ansprüche 1 bis 5, bei dem:
in dem Schritt der Abänderung des dreidimensionalen CAD-Modells eine Schicht am Boden des CAD-Modells des Dentalmodells in jeder der spaltartigen Ausnehmungen (22) als Verbindungsbrücke (25) eingefügt wird, welche die an die spaltartige Ausnehmung (22) angrenzenden Segmente miteinander verbindet,
in dem Schritt der Abänderung des dreidimensionalen CAD-Modells Löcher (26) in den Boden des CAD-Modells des Dentalmodells eingefügt werden,
nach der Herstellung des Dentalmodells Stifte in die Löcher (26) eingesetzt werden, wobei die Stifte nach dem Einsetzen in die Löcher (26) einen gewissen Betrag aus dem Dentalmodell herausragen,
die aus dem Dentalmodell herausragenden Stifte in ein flüssiges Gipsbett eingedrückt werden,
nach dem Eindrücken der Stifte solange gewartet wird, bis durch Verfestigung des Gipsbettes eine Montageplatte aus Gips entstanden ist, und
das Dentalmodell aus der Montageplatte entnommen wird, wobei die Stifte entweder im Dentalmodell oder in der Montageplatte verbleiben und als Referenzverbindung zwischen dem Dentalmodell und der Montageplatte dienen.

7. Verfahren nach einem der Ansprüche 1 bis 6, bei dem die Verbindungsbrücken (25) in einer spaltartigen Ausnehmung (22) so ausgelegt werden, dass ihr Gesamtvolumen maximal 20% des Volumens der spaltartigen Ausnehmung (22) beträgt.

8. Dentalmodell, das zumindest einen Teilbereich eines menschlichen Kiefers wiedergibt, wobei das Dentalmodell mindestens eine spaltartige Ausnehmung (22) aufweist, an der mindestens eine Verbindungsbrücke (25) angeordnet ist, welche die beiden Seiten der spaltartigen Ausnehmung (22) miteinander verbindet, so dass das Dentalmodell durch die spaltartige Ausnehmung (22) in zwei Segmente durchtrennt ist und die einzige Verbindung zwischen den beiden Segmenten über die mindestens eine Verbindungsbrücke (25) besteht, wobei die mindestens eine Verbindungsbrücke (25) geeignet ist, die Orientierung und Lage der an die spaltartige Ausnehmung (22) angrenzenden Segmente zueinander zu fixieren,
wobei die mindestens eine Verbindungsbrücke (25) mittels eines generativen Schichtbauverfahrens aus dem gleichen Material gefertigt ist wie das gesamte restliche Dental-Modell, welches ebenfalls mittels dieses generativen Schichtbauverfahrens gefertigt ist.

9. Dentalmodell nach Anspruch 8, bei dem mindestens eine Verbindungsbrücke (25) in einer spaltartigen Ausnehmung (22) positioniert ist.

10. Dentalmodell nach Anspruch 9, bei dem das Gesamtvolumen der mindestens einen Verbindungsbrücke (25) in einer spaltartigen Ausnehmung (22) maximal 20% des Volumens der spaltartigen Ausnehmung (22) beträgt.

11. Dentalmodell nach einem der Ansprüche 9 oder 10, bei dem in jeder spaltartigen Ausnehmung (22) mindestens zwei Verbindungsbrücken (25) angeordnet sind.

12. Dentalmodell nach einem der Ansprüche 9 bis 11, bei dem in jeder spaltartigen Ausnehmung (22) eine Schicht am Boden des Dentalmodells vorhanden ist.

13. Dentalmodell nach einem der Ansprüche 8 bis 12, bei dem entsprechend jeder Zahnposition von unten Löcher (26) im Boden des Dentalmodells vorhanden sind.

14. Dentalmodell nach einem der Ansprüche 8 bis 13, bei dem eine Verbindungsbrücke (25) in mindestens einer der spaltartigen Ausnehmungen (22) aus einer Schicht am Rand der spaltartigen Ausnehmung (22) besteht.

15. Dentalmodell nach Anspruch 14, bei dem die Schicht den gesamten Rand der spaltartigen Ausnehmung (22) einnimmt.

## Claims

1. Method for manufacturing a dental model for being applied in dentistry by means of a layer-wise additive manufacturing method, said method including the following steps:
modifying a three-dimensional CAD model of the dental model wherein at least one gap-like recess (22) is generated, so that the CAD model is cut into segments by this at least one gap-like recess (22),
manufacturing the dental model by means of a layer-wise additive manufacturing method on the basis of the modified three-dimensional CAD model,
**characterized in that**
in said step of modifying the three-dimensional CAD model at least one connection bridge (25) is generated at at least one of the gap-like recesses (22), which at least one connection bridge connects the segments adjoining said gap-like recess (22) to one another,
wherein said at least one connection bridge (25) is adapted to fix the orientation and position of the segments adjoining the gap-like recess (22) with respect to each other.

2. Method according to claim 1, in which at least one connection bridge (25) is generated in a gap-like recess.

3. Method according to one of claims 1 to 2, wherein the connection bridges (25) are cut through after the manufacture of the dental model.

4. Method according to claim 3, wherein reference connections between the dental model and a mounting plate are established before cutting through the connection bridges (25).

5. Method according to claim 4, wherein the reference connections are established by way of pins, which protrude from the mounting plate, engaging with holes (26) in the bottom of the dental model when the dental model is put onto the mounting plate.

6. Method according to one of claims 1 to 5, in which:
in said step of modifying the three-dimensional CAD model a layer is integrated at the bottom of the CAD model of the dental model as connection bridge (25) in each of the gap-like recesses (22), which layer connects the segments adjoining the gap-like recess (22) with each other,
in said step of modifying the three-dimensional CAD model holes (26) are integrated into the bottom of the CAD model of the dental model,
after the manufacture of said dental model pins are inserted into the holes (26), wherein the pins protrude by a certain amount from the dental model after having been inserted into the holes (26),
the pins protruding from the dental model are pressed into a liquid bed of plaster,
after the pressing of the pins it is waited until a mounting plate of plaster has been formed by a solidification of the bed of plaster and
the dental model is removed from the mounting plate, wherein the pins remain either in the dental model or the mounting plate and serve as reference connection between the dental model and the mounting plate.

7. Method according to one of claims 1 to 6, in which the connection bridges (25) in a gap-like recess (22) are designed such that their total volume is 20% of the volume of the gap-like recess (22) at maximum.

8. Dental model that represents at least a partial section of a human jaw, wherein the dental model has at least one gap-like recess (22) at which at least one connection bridge (25) is arranged that connects both sides of the gap-like recess (22) with each other so that the dental model is cut into two segments by the gap-like recess (22) and the only connection between both segments exists via said at least one connection bridge (25), wherein the at least one connection bridge (25) is adapted to fix the orientation and position of the segments adjoining the gap-like recess (22) with respect to each other,
wherein the at least one connection bridge (25) is manufactured by means of a layer-wise additive manufacturing method of the same material as the whole rest of the dental model, which is also manufactured by means of this layer-wise additive manufacturing method.

9. Dental model according to claim 8, in which at least one connection bridge (25) is positioned in a gap-like recess (22).

10. Dental model according to claim 9, in which the total volume of said at least one connection bridge (25) in a gap-like recess (22) is 20% of the volume of the gap-like recess (22) at maximum.

11. Dental model according to one of claims 9 or 10, in which in each gap-like recess (22) at least two connection bridges (25) are arranged.

12. Dental model according to one of claims 9 to 11, in which in each gap-like recess (22) a layer exists at the bottom of the dental model.

13. Dental model according to one of claims 8 to 12, in which holes (26) from below exist in the bottom of the dental model corresponding to each tooth position.

14. Dental model according to one of claims 8 to 13, in which a connection bridge (25) in at least one of the gap-like recesses (22) consists of a layer at the edge of the gap-like recess (22).

15. Dental model according to claim 14, in which the layer occupies the whole edge of the gap-like recess (22).

## Revendications

1. Procédé pour la fabrication d'un modèle dentaire destiné à être utilisé dans le domaine de la technique dentaire, à l'aide d'un procédé de construction par génération de couches, comprenant les étapes suivantes :
modification d'un modèle CAD tridimensionnel du modèle dentaire, selon laquelle au moins un évidement en forme de fente (22) est généré, de sorte que le modèle CAD est découpé en segments par cet au moins un évidement en forme de fente (22),
fabrication du modèle dentaire à l'aide d'un procédé de construction par génération de couches, sur la base du modèle CAD tridimensionnel modifié, **caractérisé en ce que**
au cours de l'étape de modification du modèle CAD tridimensionnel, au moins un pont de liaison (25) est généré sur au moins l'un des évidements en forme de fente (22), lequel au moins un pont de liaison relie entre eux les segments adjacents à l'évidement en forme de fente (22),
dans lequel l'au moins un pont de liaison (25) est apte à fixer l'orientation et la position des segments adjacents à l'évidement en forme de fente (22) les uns par rapport aux autres.

2. Procédé selon la revendication 1, dans lequel au moins un pont de liaison (25) est généré dans un évidement en forme de fente.

3. Procédé selon l'une des revendications 1 à 2, dans lequel les ponts de liaison (25) sont rompus après la fabrication du modèle dentaire.

4. Procédé selon la revendication 3, dans lequel des liaisons de référence entre le modèle dentaire et une plaque de montage sont réalisées avant la rupture des ponts de liaison (25).

5. Procédé selon la revendication 4, dans lequel les liaisons de référence sont réalisées par l'insertion de tiges sortant de la plaque de montage dans des trous (26) situés au fond du modèle dentaire, lors du montage du modèle dentaire sur la plaque de montage.

6. Procédé selon l'une des revendications 1 à 5, dans lequel :
au cours de l'étape de modification du modèle CAD tridimensionnel, une couche est ajoutée au fond du modèle CAD du modèle dentaire dans chacun des évidements en forme de fente (22) en tant que pont de liaison (25) reliant entre eux les segments adjacents à l'évidement en forme de fente (22),
au cours de l'étape de modification du modèle CAD tridimensionnel, des trous (26) sont ajoutés dans le fond du modèle CAD du modèle dentaire,
après la fabrication du modèle dentaire, des tiges sont introduites dans les trous (26), les tiges faisant saillie sur une certaine distance hors du modèle dentaire après l'introduction dans les trous (26),
les tiges faisant saillie hors du modèle dentaire sont enfoncées dans un lit de plâtre liquide,
après l'enfoncement des tiges, un temps d'attente est respecté jusqu'à ce que la solidification du lit de plâtre forme une plaque de montage en plâtre, et
le modèle dentaire est retiré de la plaque de montage, les tiges demeurant dans le modèle dentaire ou dans la plaque de montage et servant de liaison de référence entre le modèle dentaire et la plaque de montage.

7. Procédé selon l'une des revendications 1 à 6, dans lequel les ponts de liaison (25) dans un évidement en forme de fente (22) sont conçus sorte que leur volume global représente au maximum 20% du volume de l'évidement en forme de fente (22).

8. Modèle dentaire reproduisant au moins une région partielle d'une mâchoire humaine, le modèle dentaire présentant au moins un évidement en forme de fente (22) sur lequel est disposé au moins un pont de liaison (25) reliant entre eux les deux côtés de l'évidement en forme de fente (22), de sorte que le modèle dentaire est séparé en deux segments par l'évidement en forme de fente (22), et que la seule liaison entre les deux segments est réalisée par l'au moins un pont de liaison (25), l'au moins un pont de liaison (25) étant apte à fixer l'orientation et la position des segments adjacents à l'évidement en forme de fente (22) les uns par rapport aux autres,
dans lequel l'au moins un pont de liaison (25) est fabriqué à l'aide d'un procédé de construction par génération de couches, à partir du même matériau que tout le reste du modèle dentaire, lequel est également fabriqué à l'aide de ce procédé de construction par génération de couches.

9. Modèle dentaire selon la revendication 8, dans lequel au moins un pont de liaison (25) est positionné dans un évidement en forme de fente (22).

10. Modèle dentaire selon la revendication 9, dans lequel le volume global de l'au moins un pont de liaison (25) dans un évidement en forme de fente (22) représente au maximum 20% du volume de l'évidement en forme de fente (22).

11. Modèle dentaire selon l'une des revendications 9 ou 10, dans lequel au moins deux ponts de liaison (25) sont disposés dans chaque évidement en forme de fente (22).

12. Modèle dentaire selon l'une des revendications 9 à 11, dans lequel une couche au fond du modèle dentaire est prévue dans chaque évidement en forme de fente (22).

13. Modèle dentaire selon l'une des revendications 8 à 12, dans lequel par des trous (26) correspondant par en dessous à chaque position de dent sont prévus dans le fond du modèle dentaire.

14. Modèle dentaire selon l'une des revendications 8 à 13, dans lequel un pont de liaison (25) dans l'un au moins des évidements en forme de fente (22) est constitué d'une couche au bord de l'évidement en forme de fente (22).

15. Modèle dentaire selon la revendication 14, dans lequel la couche occupe l'ensemble du bord de l'évidement en forme de fente (22).
